# EUROPÄISCHE PATENTSCHRIFT

(11) **EP 1 716 012 B1**
(45) Veröffentlichungstag und Bekanntmachung des Hinweises auf die Patenterteilung: **01.10.2014**
(21) Anmeldenummer: 05706842.1
(22) Anmeldetag: 07.01.2005
(51) Int. Cl.: B60J 3/02, F16B 5/07, F16B 5/06

(54) **KOMPONENTE, INSBESONDERE SONNENBLENDE UND INSBESONDERE FÜR EIN FAHRZEUG, VERFAHREN ZUR HERSTELLUNG EINER KOMPONENTE**
COMPONENT, IN PARTICULAR SUN VISOR DESIGNED FOR USE IN A VEHICLE AND METHOD FOR PRODUCING A COMPONENT
COMPOSANT, NOTAMMENT PARE-SOLEIL DESTINE EN PARTICULIER A UN VEHICULE, ET PROCEDE DE FABRICATION D'UN TEL COMPOSANT

(30) Priorität: 13.02.2004 DE 102004007489
(43) Veröffentlichungstag der Anmeldung: 02.11.2006
(73) Patentinhaber: Johnson Controls Interiors GmbH & Co. KG, 47929 Grefrath (DE)
(72) Erfinder: BECK, Frédéric, F-57500 Saint-Avold Dourd'hal (FR); JUNG, Stéphane, F-57415 Enchenberg (FR); DELUS, Christian, F-57645 Retonfey (FR); STRICHER, Gabriel, F-57660 Laning (FR); WELTER, Patrick, F-57730 Lachambre (FR); SELVINI, Frédéric, F-57550 Falck (FR)
(74) Vertreter: Trinks, Ole
(86) Internationale Anmeldenummer: PCT/EP2005/000079
(87) Internationale Veröffentlichungsnummer: WO 2005/080106

(56) Entgegenhaltungen:
- EP-A1- 0 331 779
- DE-A1- 2 814 656
- DE-U- 7 526 219
- JP-A- 2002 127 819
- US-A- 4 653 798
- US-A- 4 858 983
- US-A- 5 580 118
- US-B1- 6 824 188

## Beschreibung

Die Erfindung betrifft eine Komponente, insbesondere eine Sonnenblende und Insbesondere für ein Fahrzeug.

Solche Komponenten, die insbesondere im Innenraum eines Fahrzeugs Verwendung finden, sind allgemein bekannt, vgl. etwa die Dokumente D 7526219 U1, US 5,580,118 A, DE 28 14 656 A1, EP 0 331 779 A, US 4,858,983 A, US 4,653,798 A oder US 6,824,188 A. Das Dokument JP 2002 127 819 offenbart eine Fahrzeugkomponente mit den Merkmalen des Oberbegriffs des Anspruchs 1. Sie müssen einerseits selbst leicht und kostengünstig sein. Andererseits muss Ihre Montage kostengünstig sein und weiterhin müssen sie eine große Lebensdauer aufweisen, während der sie teilweise extremen Situationen hinsichtlich der Temperaturverhältnisse und hinsichtlich der Schwingungs- bzw. Vibrationsverhältnisse ausgesetzt sind. Des weiteren müssen solche Komponenten am Ende ihrer Benutzungsdauer auch leicht und vor allem vollständig einer Materialverwertung (Recycling) zuführbar sein. Schließlich müssen solche Komponenten, insbesondere wenn sie häufig in den normalen Sichtbereich eines Benutzers des Fahrzeugs geraten, auch optisch ansprechend gestaltet sein.

Es ist bei bekannten Komponenten üblich, dass sogenannte Rastverbindungen - auch Klippverbindungen genannt - zur äußeren Befestigung von Einzelteilen an Strukturelementen der Komponenten verwendet werden. Solche Rastverbindungen greifen in der Regel mit einem Einführelement in eine entsprechende Ausnehmung der Komponente ein, wobei entweder das Einführelement oder aber die Komponente selbst im Bereich ihrer Ausnehmung bei der Verbindung zunächst ausgelenkt werden und danach einrasten. Hierbei ist die Einführbewegung (ebenso wie das Einführelement und die Ausnehmung) in der Regel im wesentlichen senkrecht zur Oberfläche bzw. zur abzudeckenden Fläche der Komponente angeordnet.

Um einen stabilen Halt zu gewährleisten, sind in der Regel eine Mehrzahl von solchen Einführelementen vorhanden, was bewirkt, dass bei der Montage immer zuerst eine Ausrichtung der Mehrzahl von Einführelementen in ihre entsprechenden Ausnehmungen vorgenommen werden muss, bevor die endgültige Verrastung vorgenommen werden kann. Da es sich bei diesen beiden Schritten um Bewegungen in die gleiche Richtung handelt (nämlich das Einführen der Einführelemente In die Ausnehmungen) können die beiden Schritte vermischt werden, so dass beispielsweise bereits eines der Mehrzahl an Einführelementen verrastet ist währenddem ein anderes Einführelement noch ausgerichtet werden müsste, was jedoch aufgrund der bereits vorliegenden Verrastung des einen Einführelements teilweise nicht mehr möglich ist. Daher ist die Montage bei herkömmlicherweise bekannten Komponenten schwierig, nur schwer automatisierbar und darüber hinaus teuer, beispielsweise weil die Ausschussrate höher liegt.

Der Erfindung liegt daher die Aufgabe zugrunde, eine Komponente, insbesondere Sonnenblende und insbesondere für ein Fahrzeug, zu schaffen, die die Nachteile des Standes der Technik vermeldet.

Diese Aufgabe wird erfindungsgemäß durch eine Fahrzeugkomponente nach Anspruch 1 gelöst. Hierdurch ist es auf einfache Weise möglich, dass das Abdeckelement bei der Montage der Komponente zunächst relativ zum Strukturteil eindeutig und durch eine Relativbewegung in einer ersten Richtung positioniert werden kann und dass anschließend das Abdeckelement zur Herstellung der Verbindung in eine andere Richtung, nämlich im wesentlichen tangential zur Hauptausdehnungsrichtung, bewegt wird.

Bevorzugt ist erfindungsgemäß, dass das Abdeckelement wenigstens eine Hauptausdehnungsrichtung im wesentlichen in einer Ebene oder Im wesentlichen in einer Zylindermantelfläche aufweist und dass die Verbindungsbewegung im wesentlichen In der Ebene bzw. Im wesentlichen in der Zylindermantelfläche erfolgt. In der Regel dient das Abdeckelement zum Abdecken beispielsweise eines Randes eines anderen an, in oder auf der Komponente angeordneten Elements, so dass das Abdeckelement bei fertig montierter Komponente eine gedachte Berührungsfläche einer gewissen Ausdehnung zu der restlichen Komponente aufweist. Diese gedachte Berührungsfläche kann entweder im wesentlichen eben sein, so dass wenigstens eine Hauptausdehnungsrichtung des Abdeckelementes im wesentlichen in einer Ebene verläuft. Andererseits kann diese gedachte Berührungsfläche auch - in eine oder in zwei Raumrichtungen - gekrümmt sein. Bei einer Krümmung in eine Raumrichtung entspricht die gedachte Berührungsfläche einer Zylindermantelfläche.

Bei einer Krümmung in zwei Raumrichtung entspricht die gedachte Berührungsfläche einer Kugelschale. In jedem dieser Fälle ist es erfindungsgemäß möglich, dass eine Relativbewegung des Abdeckelements gegenüber der restlichen Komponente, d.h. insbesondere gegenüber dem Strukturteil, in der gedachten Berührungsfläche - d.h. beispielsweise einer Ebene, einer Zylindermantelfläche oder einer Kugelschale - erfolgt.

Bevorzugt ist ferner, dass in der Ebene oder in der Zylindermantelfläche wenigstens ein erstes Verschiebeelement des Strukturteils oder des Abdeckelements angeordnet ist. Ein solches Verschiebeelement dient erfindungsgemäß bevorzugt als Anschlag für die beim ersten Herstellungsschritt der Komponente durchzuführende Positionterbewegung.

Weiterhin ist bevorzugt, dass das wenigstens eine erste Verschiebeelement mit wenigstens einem zweiten Verschiebeelement zur Arretierung des Abdeckelements gegenüber dem Strukturteil wenigstens gegenüber einer Bewegung senkrecht zur Ebene oder zur Zylindermantelfläche zusammenwirkt. Hierdurch ist es auf einfache Weise möglich, eine Arretierung zwischen dem Abdeckelement und dem Strukturteil zu erreichen.

Ferner ist es vorteilhaft, wenn eine Rastverbindung zwischen dem Abdeckelement und dem Strukturteil zur Arretierung des Abdeckelements gegenüber dem Strukturteil gegenüber einer Bewegung in der Ebene oder in der Zylindermantelfläche vorgesehen ist. Hierdurch ist es möglich, die Verbindung des Strukturteils mit dem Abdeckelement in eine zusätzliche Richtung zu arretieren.

Vorgesehen ist es weiterhin, wenn die Rastverbindung nur Irreversibel lösbar ist. Hierdurch ist weitgehend sichergestellt, dass ein unbeabsichtigtes Lösen der Verbindung nicht möglich ist. Ein Trennung der Verbindung ist nur durch eine Zerstörung zumindest eines Teils der Rastverbindung möglich.

Besonders bevorzugt ist, wenn das Abdeckelement rahmenartig vorgesehen und wenn die Komponente eine Sonnenblende mit einem Spiegel ist, wobei das Abdeckelement wenigstens zur Abdeckung des Randbereichs des Spiegels vorgesehen ist. In diesem Fall ist es auf einfache Weise möglich, eine ästhetische Abdeckung insbesondere eines geschlossen umrandeten Übergangsbereichs herzustellen bzw. insbesondere eine Abdeckung um einen Spiegel herum herzustellen.

Ein weiterer Gegenstand der vorliegenden Offenbarung ist ein Verfahren zur Herstellung einer insbesondere erfindungsgemäßen Komponente, wobei ein Abdeckelement und ein Strukturteil in einem ersten Schritt derart relativ zueinander angeordnet werden, dass wenigstens ein erstes Verschiebeelement und wenigstens ein zweites Verschiebeelement sich zumindest abschnittsweise berühren, wobei in einem zweiten Schritt eine Verbindungsbewegung des Abdeckelements relativ zum Strukturteil in einer zu wenigstens einer Hauptausdehnungsrichtung des Abdeckelements im wesentlichen tangentialen Richtung ausgeführt wird. Hierdurch kann die Produktion von solchen Komponenten verbessert, insbesondere beschleunigt und verbilligt, werden.

Die Erfindung wird nachfolgend anhand von in der Zeichnung dargestellten Ausführungsbeispielen näher erläutert.
- **Figur 1**: zeigt eine perspektivische Darstellung einer Sonnenblende als Beispiel einer erfindungsgemäßen Komponente.
- **Figur 2**: zeigt eine Explosionsdarstellung des Aufbaus der Sonnenblende bzw. der Komponente, wobei Insbesondere ein Abdeckelements erkennbar ist.
- **Figur 3**: zeigt eine Explosionsdarstellung wesentlicher, die elektrische und mechanische Funktionalität der Komponente sichernder Elemente.
- **Figur 4**: zeigt die Rückseite des Abdeckelements zusammen mit einer Andeutung einer Hauptausdehnungsrichtung des Abdeckelements und der im wesentlichen tangentialen Richtung.
- **Figur 5**: zeigt die Vorderseite eines Strukturteils der erfindungsgemäßen Komponente.
- **Figuren 6a und 6b**: zeigen eine vergrößerte Darstellung der die Verbindung bewirkenden Bewegung bzw. der die Verbindung bewirkenden Elemente.
- **Figur 7**: zeigt eine vergrößerte Darstellung einer Rastverbindung zur Arretierung des Abdeckelements gegenüber einer Bewegung in Richtung der Verbindungsbewegung.

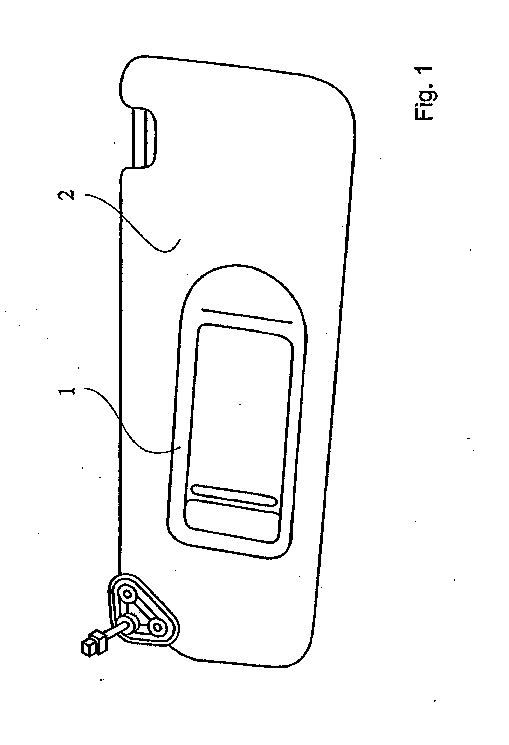

**In** Figur 1 ist eine perspektivische Darstellung einer Sonnenblende 2 als Beispiel einer erfindungsgemäßen Komponente 2 dargestellt. Die Sonnenblende 2 weist ein Abdeckelement 1 auf, das einen in **Figur 1** nicht näher mit einem Bezugszeichen bezeichneten Spiegelbereich umgrenzt bzw. dessen Randbereich zumindest teilweise abdeckt. Der Spiegel kann als Kosmetikspiegel oder dergleichen vorgesehen sein und insbesondere eine Beleuchtung aufweisen, wobei eine Beleuchtung jedoch nicht zwingend ist. Weiterhin kann es erfindungsgemäß vorgesehen sein, dass der Spiegelbereich bzw. der Spiegel - zusätzlich zum Abdeckelement - eine nicht näher mit einem Bezugszeichen bezeichnete Abdeckung aufweist.

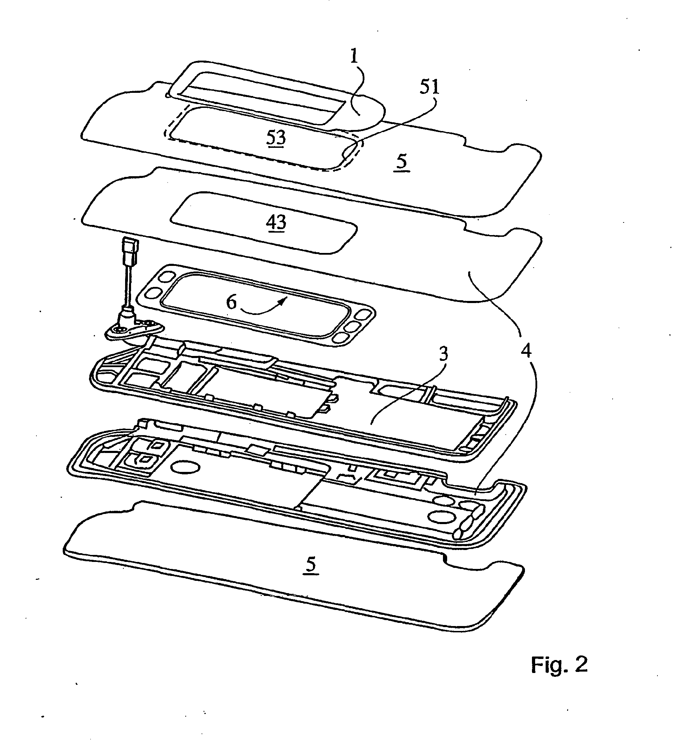

In **Figur 2** Ist eine Explosionsdarstellung zur Verdeutlichung des Aufbaus der Sonnenblende 2 bzw. der Komponente 2 abgebildet, wobei insbesondere ein Dekormaterial 5 und (wenigstens) ein Formkörper 4 erkennbar sind. Die Sonnenblende 2 als Beispiel der erfindungsgemäßen Komponente 2 umfasst jeweils an seiner Oberseite und seiner Unterseite ein Dekormaterial 5 und einen Formkörper 4. Zwischen den Formkörpern 4 befindet sich im Beispiel ein Strukturteil 3, auf dem beispielsweise die (mittels Bezugszeichen in **Figur 2** nicht näher bezeichneten) elektrischen Bauelemente bzw. Leitungen der Komponente 2 bzw. der Sonnenblende 2 angeordnet sind. Das Vorhandensein einer Oberseite und einer Unterseite der Sonnenblende 2 rührt daher, dass die Sonnenblende 2 in der Regel beidseitig eine Sichtseite aufweist, d.h. ein Benutzer kann je nach Klappstellung der Sonnenblende sowohl die Unterseite einsehen als auch die Oberseite einsehen. Diese Eigenschaft muss nicht in jeder erfindungsgemäßen Komponente 2 in bzw. an einem Fahrzeug, insbesondere ein Kraftfahrzeug, realisiert sein. Beispielsweise ist es für als Verkleidungen einer Tür oder eines anderen Bestandteils des Fahrzeuginnenraums vorgesehenen Komponenten 2 möglich, dass diese lediglich eine Sichtseite aufweisen. In diesem Fall könnte eine solche Komponente 2 auch lediglich ein Formkörper 4 und ein Dekormaterial 5 aufweisen.

Im folgenden wird lediglich die Oberseite der Sonnenblende 2 näher beschrieben. Die Oberseite der Sonnenblende 2 weist einen Formkörper 4 und ein Dekormaterial 5 auf, wobei das Dekormaterial 5 (und im Beispiel auch der Formkörper 4) eine Öffnung aufweisen. Die Öffnung im Dekormaterial 5 wird mit dem Bezugszeichen 53 bezeichnet und die Öffnung im Formkörper 4 wird mit dem Bezugszeichen 43 bezeichnet. Die Öffnungen 43, 53 sind bei der Sonnenblende 2 als Beispiel einer Komponente 2 insbesondere für den einseitig vorgesehenen Spiegel vorhanden. Jedoch könnten entsprechende Öffnungen 43, bei einer anderen Komponente 2 auch anderen Zwecken dienen. Erfindungsgemäß weist das Dekormaterial 5 um die Öffnung 53 herum einen Randbereich 61 auf, in welchem das Dekormaterial 5 letztlich am Formkörper 4 befestigt werden muss (damit beispielsweise keine Faltenwürfe des Dekormeterials 5 auftreten). Dies kann beispielsweise mittels eines Umbugs des Dekormaterials 5 geschehen oder auch mittels eines zusätzlichen Befestigungselements 6.

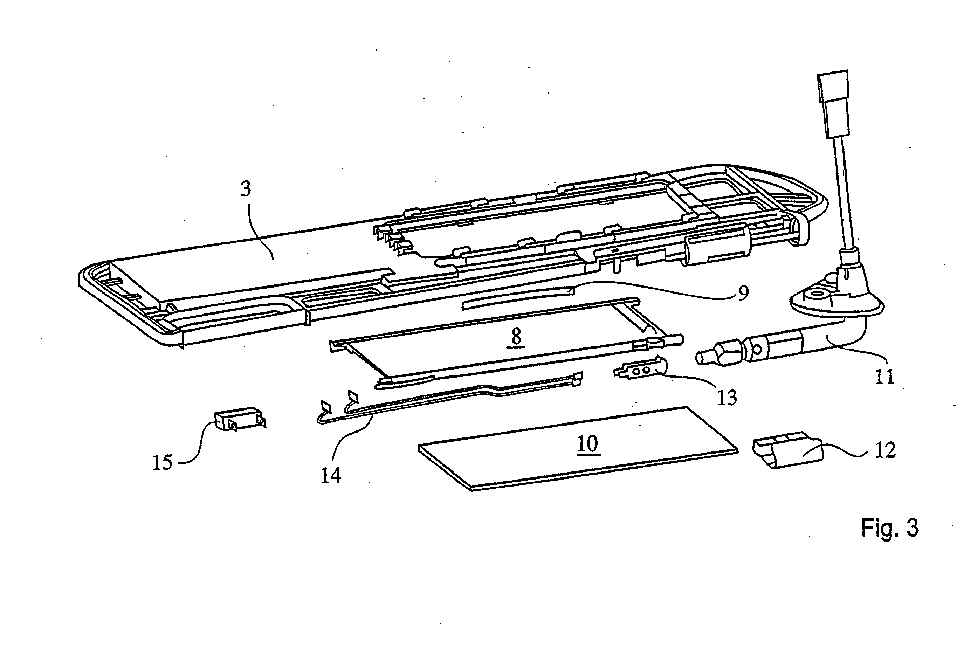

In **Figur 3** ist eine Explosionsdarstellung wesentlicher, die elektrische und mechanische Funktionalität der Komponente 2 sichernder Elemente abgebildet, die im wesentlichen alle im Strukturteil 3 integriert bzw. am Strukturteil 3 montiert sind. Am Strukturteil 3 sind beispielhaft eine Schiebeabdeckung 8, eine Abdeckungsfeder 9, ein Spiegel 10, eine Schwenkvorrichtung 11, eine Schwenkfeder 12 sowie eine elektrische Anschlusseinheit befestigt, wobei die elektrische Anschlusseinheit beispielhaft aus zwei Anschlüssen 13, zwei Leitungen 14 und einem Schalter 15 besteht. Die Schwenkvorrichtung 11 und die Schwenkfeder 12 ermöglichen, dass die Sonnenblende 2 schwenkbar angeordnet werden kann.

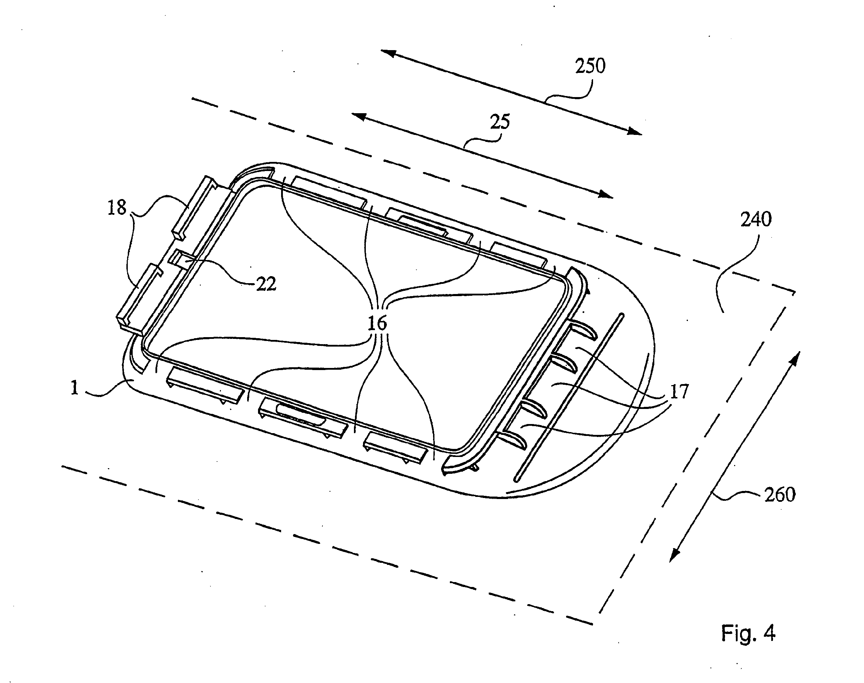

In **Figur 4** ist die Rückseite des Abdeckelements 1 (d.h. die der Sichtseite des Abdeckelements 1 abgewandte Seite) zusammen mit einer Andeutung einer Hauptausdehnungsrichtung 250 des Abdeckelements 1 und der im wesentlichen tangential zur Hauptausdehnungsrichtung 250 vorgesehenen Richtung 25 abgebildet. Das Abdeckelement 1 weist eine Mehrzahl von ersten Verschiebeelementen 16, 17, 18 auf, wobei beispielhaft jeweils vier davon an den Längsseiten des beispielhaft rahmenartig ausgebildeten Abdeckelements 1 vorgesehen und mit dem Bezugszeichen 16 bezeichnet sind, wobei beispielhaft drei an einer der Schmalseiten des Abdeckelements 1 vorgesehen und mit dem Bezugszeichen 17 bezeichnet sind und wobei beispielhaft zwei an der anderen der Schmalseiten des Abdeckelements 1 vorgesehen und mit dem Bezugszeichen 18 bezeichnet sind. Die ersten Verschiebeelemente 16, 17, 18 werden im folgenden unabhängig von ihrem Ort am Abdeckelement 1 betrachtet; erfindungsgemäß ist es möglich, auch lediglich ein erstes Verschiebelement 16 vorzusehen. Das Abdeckelement 1 weist ferner ein erstes Rastelement 22 auf.

Das Abdeckelement 1 weist im Beispiel eine erste Hauptausdehnungsrichtung 250 und eine weitere Hauptausdehnungsrichtung 260 auf, die beide eine Ebene 240 bilden. Abgesehen von lokalen Ausnehmungen bzw. Vorsprüngen bildet die Ebene 240 eine gedachte Berührungsfläche zu der restlichen Komponente 2, welche durch das Abdeckelement 1 zumindest teilweise abgedeckt werden soll.

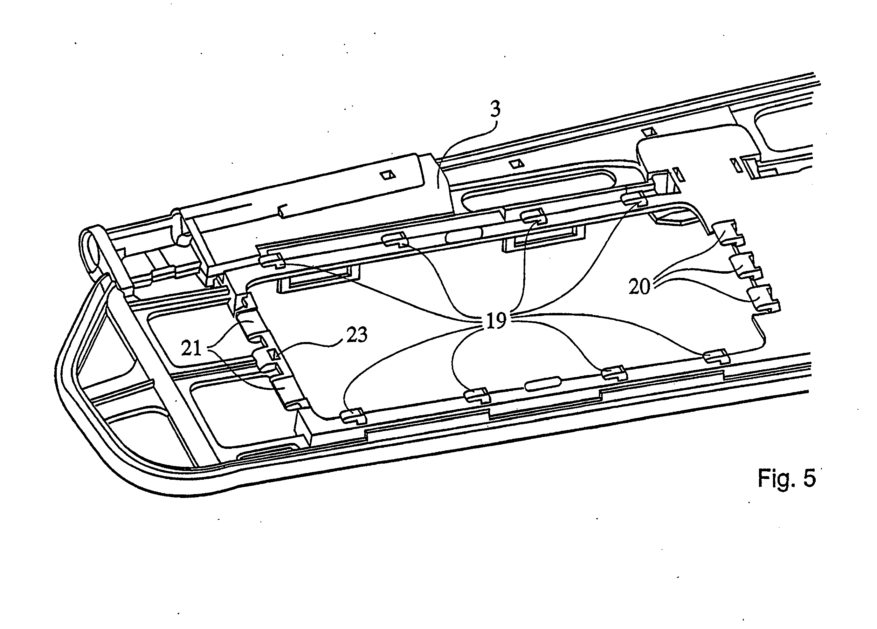

In **Figur 5** ist die Vorderseite des Strukturteils 3 (d.h. diejenige Seite, die durch das Abdeckelement zumindest teilweise abgedeckt werden soll) der erfindungsgemäßen Komponente 2 dargestellt. Das Strukturteil 3 weist zum Zusammenwirken mit dem ersten Rastelement 22 ein zweites Rastelement 23 auf. Weiterhin weist das Strukturteil 3 ein an das Abdeckteil 1 angepasste Aufnahme, beispielhaft eine rahmenartige Aufnahme für das (beispielhaft ebenfalls rahmenartige) Abdeckelement 1, auf. Das Strukturteil 3 weist ferner eine Mehrzahl von zweiten Verschiebeelementen 19. 20, 21 auf, wobei beispielhaft jeweils vier davon an den Längsseiten der rahmenartigen Aufnahme vorgesehen und mit dem Bezugszeichen 19 bezeichnet sind, wobei beispielhaft drei an einer der Schmalseiten der rahmenartigen Aufnahme vorgesehen und mit dem Bezugszeichen 20 bezeichnet sind und wobei beispielhaft zwei an der anderen der Schmalseiten der rahmenartigen Aufnahme vorgesehen und mit dem Bezugszeichen 21 bezeichnet sind.

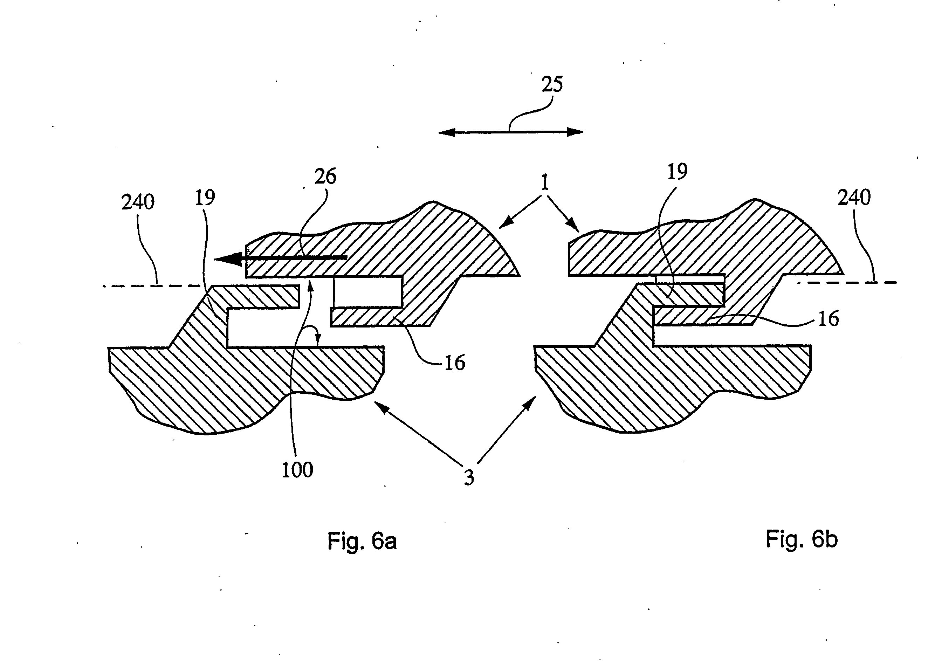

In den **Figuren 6a und 6b** ist eine vergrößerte Darstellung der die Verbindung zwischen dem Strukturteil 3 und dem Abdeckelement 1 bewirkenden Bewegung bzw. der die Verbindung bewirkenden Verschiebeelemente dargestellt, wobei beispielhaft für das erste Verschiebeelement das Bezugszeichen 16 verwendet wird und wobei beispielhaft für das zweite Verschiebeelement das Bezugszeichen 19 verwendet wird.

In **Figur 6a** ist der Zustand vor der Durchführung der Verschiebebewegung 26 dargestellt. Das erste Verschiebeelement 16 greift noch nicht in das zweite Verschiebeelement 19 ein, so dass auch noch keine Arretierung des Abdeckelements 1 gegenüber dem Strukturteil 3 in eine (in Figur nicht eigens mit einem Bezugszeichen bezeichneten) Richtung senkrecht zur Ebene 240 bewirkt Ist. Es kann erfindungsgemäß vorgesehen sein, dass sich die Verschlebeelemente 16, 19 in dieser Situation an einer Verschiebefläche 100 berühren und damit in die Richtung senkrecht zur Ebene ein Anschlag gebildet wird.

Mittels der Verbindungsbewegung 26, die in einer Richtung 25 tangential zur einer Hauptausdehnungsrichtung 250 des Abdeckelements 1 erfolgt, wird der in Figur **6b** dargestellte Zustand erreicht, bei dem die Arretierung des Abdeckelements 1 gegenüber einer Bewegung senkrecht zur Ebene 240 herstellt ist.

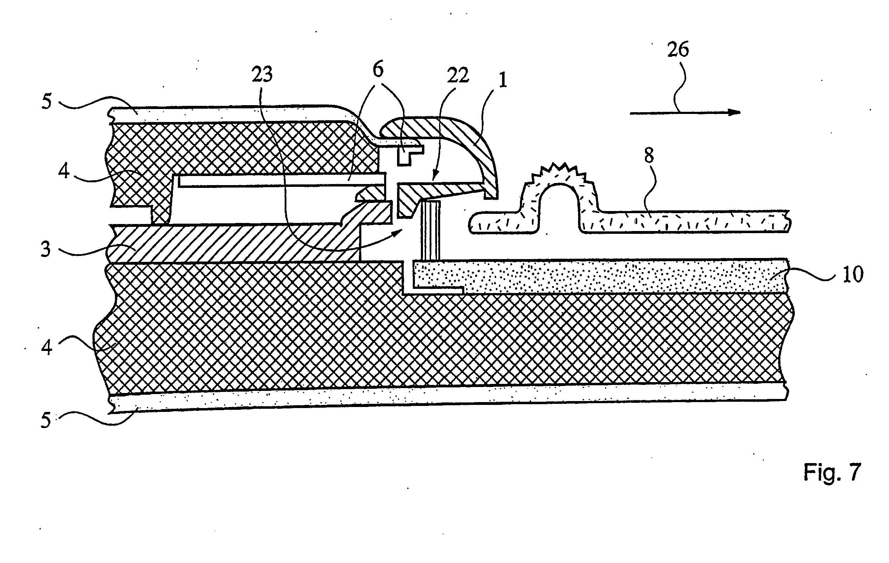

In Figur **7** ist eine vergrößerte Darstellung einer Rastverbindung des ersten Rastelements 22 mit dem zweiten Rastelement 23 zur Arretierung des Abdeckelements 1 gegenüber einer Bewegung in zur Hauptausdehnungsrichtung 250 tangentialer Richtung 25. Neben dem Abdeckelement 1, dem Strukturteil 3, dem ersten Rastelement 22 und dem zweiten Rastelement 23 Ist weiterhin der Formkörper 4 (jeweils für die Oberseite und für die Unterseite), das Dekormaterial 5 (ebenfalls jeweils für die Oberseite und für die Unterseite), der Spiegel 10, die Schiebeabdeckung 8 und das Befestigungselement 6 dargestellt.

### Bezugszeichenliste

- 1: Abdeckelement
- 2: Komponente/Sonnenblende
- 3: Strukturteil
- 4: Formkörper
- 5: Dekormaterial
- 6: Befestigungskomponente
- 8: Schiebeabdeckung
- 9: Abdeckungsfeder
- 10: Spiegel
- 11: Schwenkvorrichtung
- 12: Schwenkfeder
- 13: Anschlüsse
- 14: Leitungen
- 15: Schalter
- 16, 17, 18: erstes Verschiebeelement
- 19, 20, 21: zweites Verschiebeelement
- 22: erstes Rastelement
- 23: zweites Rastelement
- 25: tangentiale Richtung
- 26: Verbindungsbewegung
- 41: Rand
- 43: Öffnung im Formkörper
- 51: Randbereich
- 53: Öffnung im Dekormaterial
- 100: Verschiebefläche
- 240: Ebene
- 250: Hauptausdehnungsrichtung
- 260: weitere Hauptausdehnungsrichtung

## Patentansprüche

1. Fahrzeugkomponente (2), insbesondere Sonnenblende (2), wobei die Fahrzeugkomponente (2) ein Strukturteil (3) und ein Abdeckelement (1) aufweist, wobei das Abdeckelement (1) mit dem Strukturteil (3) mittels einer lösbaren Verbindung verbunden ist, wobei eine Verbindungsbewegung (26) des Abdeckelements (1) relativ zum Strukturteil (3) in einer zu wenigstens einer Hauptausdehnungsrichtung (250) des Abdeckelements (1) im wesentlichen tangentialen Richtung (25) zur Herstellung der Verbindung vorgesehen ist, wobei das Abdeckelement (1) wenigstens eine Hauptausdehnungsrichtung (250) im wesentlichen in einer Ebene (240) oder im wesentlichen in einer Zylindermantelfläche aufweist, wobei in der Ebene (240) oder in der Zylindermantelfläche wenigstens ein erstes Verschiebeelement (16, 17, 18) des Strukturteils (3) oder des Abdeckelements (1) angeordnet ist und die Verbindungsbewegung (26) des Abdeckelements relativ zum Strukturteil im wesentlichen in der Ebene (240) oder in der Zylindermantelfläche erfolgt, wobei nach der Verbindungsbewegung (26) das Abdeckelement (1) gegenüber dem Strukturteil (3) wenigstens gegenüber einer Bewegung senkrecht zur Ebene (240) oder zur Zylindermantelfläche arretiert ist, wobei eine Rastverbindung (22, 23) zwischen dem Abdeckelement (1) und dem Strukturteil (3) zur Arretierung des Abdeckelements gegenüber dem Strukturteil (3) gegenüber einer Bewegung in der Ebene (240) oder in der Zylindermantelfläche vorgesehen ist, wobei die Rastverbindung (22, 23) irreversibel lösbar ist, **dadurch gekennzeichnet, dass** die Fahrzeugkomponente (2) eine Sonnenblende (2) mit einem Spiegel (10) ist, wobei das Abdeckelement (1) wenigstens zur Abdeckung des Randbereichs des Spiegels (10) vorgesehen ist.

2. Fahrzeugkomponente (2) nach Anspruch 1, **dadurch gekennzeichnet, dass** das wenigstens eine erste Verschiebeelement (16, 17, 18) mit wenigstens einem zweiten Verschiebeelement (19, 20, 21) zur Arretierung des Abdeckelements (1) gegenüber dem Strukturteil (3) wenigstens gegenüber einer Bewegung senkrecht zur Ebene (240) oder zur Zylindermantelfläche Zylindermantelfläche zusammenwirkt.

3. Fahrzeugkomponente (2) nach einem der vorhergehenden Ansprüche, **dadurch gekennzeichnet, dass** das Abdeckelement (1) rahmenartig vorgesehen ist.

## Claims

1. A vehicle component (2), in particular a sun visor (2), wherein the vehicle component (2) comprises a structural part (3) and a cover element (1), wherein the cover element (1) is connected to the structural part (3) by means of a releasable connection, wherein a connecting movement (26) of the cover element (1) relative to the structural part (3) in an at least one main direction of extension (250) of the cover element (1) is provided in a substantially tangential direction (25) to produce the connection, wherein the cover element (1) exhibits at least one main direction of extension (250) substantially in one plane (240) or substantially in one cylindrical lateral area, wherein at least one first sliding element (16, 17, 18) of the structural part (3) or the cover element (1) is arranged in the plane (240) or in the cylindrical lateral area and the connecting movement (26) of the cover element relative to the structural part occurs substantially in the plane (240) or in the cylindrical lateral area, wherein the cover element (1) is locked relative to the structural part (3) after the connecting movement (26) at least relative to a movement perpendicular to the plane (240) or to the cylindrical lateral area, wherein a latching connection (22, 23) is provided between the cover element (1) and the structural part (3) to lock the cover element relative to the structural part (3) with respect to a movement in the plane (240) or in the cylindrical lateral area, wherein the latching connection (22, 23) is irreversibly non-releasable, **characterized in that** the vehicle component (2) is a sun visor (2) comprising a mirror (10), wherein the cover element (1) is provided to at least cover the edge region of the mirror (10).

2. The vehicle component (2) according to claim 1, **characterized in that** the at least one first sliding element (16, 17, 18) interacts with at least one second sliding element (19, 20, 21) to lock the cover element (1) relative to the structural part (3) at least with respect to a movement perpendicular to the plane (240) or to the cylindrical lateral area.

3. The vehicle component (2) according to any preceding claim, **characterized in that** the cover element (1) is provided as a frame.

## Revendications

1. Composant pour véhicule (2), en particulier pare-soleil (2), dans lequel le composant pour véhicule (2) comprend une partie structurelle (3) et un élément de recouvrement (1), l'élément de recouvrement (1) étant relié à la partie structurelle (3) au moyen d'une liaison détachable, dans lequel, pour établir la liaison, il est prévu un mouvement de liaison (26) de l'élément de recouvrement (1) par rapport à la partie structurelle (3) dans une direction sensiblement tangentielle par rapport à une direction d'extension principale (250) de l'élément de recouvrement (1), l'élément de recouvrement (1) comportant au moins une direction d'extension principale (250) sensiblement dans un plan (240) ou sensiblement dans une surface enveloppe cylindrique, au moins un premier élément déplaçable (16, 17, 18) de la partie structurelle (3) ou de l'élément de recouvrement (1) est agencé dans le plan (240) ou dans la surface enveloppe cylindrique, et le mouvement de liaison (26) de l'élément de recouvrement par rapport à la partie structurelle a lieu sensiblement dans le plan (240) ou dans la surface enveloppe cylindrique, et après le mouvement de liaison (26) l'élément de recouvrement (1) est arrêté par rapport à la partie structurelle (3) au moins à l'encontre d'un mouvement perpendiculairement au plan (240) ou à la surface enveloppe cylindrique, dans lequel il est prévu une liaison à enclenchement (22, 23) entre l'élément de recouvrement (1) et la partie structurelle (3) pour arrêter l'élément de recouvrement par rapport à la partie structurelle (3) à l'encontre d'un mouvement dans le plan (240) ou dans la surface enveloppe cylindrique, dans lequel la liaison à enclenchement (22, 23) est détachable de manière irréversible, **caractérisé en ce que** le composant de véhicule (2) est un pare-soleil (2) avec un miroir (10), et l'élément de recouvrement (1) est prévu au moins pour recouvrir la région de bordure du miroir (10).

2. Composant pour véhicule (2) selon la revendication 1, **caractérisé en ce que** ledit au moins un premier élément déplaçable (16, 17, 18) coopère avec au moins un second élément déplaçable (19, 20, 21) pour arrêter l'élément de recouvrement (1) par rapport à la partie structurelle (3) au moins à l'encontre d'un mouvement perpendiculairement au plan (240) ou à la surface enveloppe cylindrique.

3. Composant pour véhicule (2) selon l'une des revendications précédentes, **caractérisé en ce que** l'élément de recouvrement (1) est prévu à la manière d'un cadre.
